# EUROPEAN PATENT SPECIFICATION

(11) **EP 2 469 764 B1**
(45) Date of publication and mention of the grant of the patent: **24.01.2018**
(21) Application number: 11195211.5
(22) Date of filing: 22.12.2011
(51) Int. Cl.: H04L 12/26, H04L 12/24

(54) **DATA SPEED MEASUREMENT APPLICATION ON PERSONAL DIGITAL ASSISTANT TERMINALS**
DATEN-GESCHWINDIGKEITSMESSUNGSANWENDUNG AUF PERSÖNLICHEN DIGITALEN HILFSENDGERÄTEN
APPLICATION DE MESURE DE VITESSE DE DONNÉES SUR DES TERMINAUX D'ASSISTANT NUMÉRIQUE PERSONNEL

(30) Priority: 23.12.2010 NL 2005918
(43) Date of publication of application: 27.06.2012
(73) Proprietor: CA, Inc., Islandia, NY 11749 (US)
(72) Inventor: Van de Burgt, Stephanus Pieter, Palo Alto CA 94301 (US); Pors, Mark, Albert, 10435 Berlin (DE); Ennes, Pieter, Cambridge CB1 1DT (GB)
(74) Representative: Patentwerk B.V.

(56) References cited:
- WO-A1-2006/094296
- US-A1- 2006 217 116
- US-A1- 2006 234 639

## Description

### CROSS-REFERENCE TO RELATED APPLICATION

The present application claims priority from Dutch Patent Application No. NL 2005918, filed on December 23, 2010.

### TECHNICAL FIELD

The present disclosure relates generally to executing applications, and more specifically to monitoring the performance of applications executed on personal digital assistant ("PDA") terminals.

### BACKGROUND

Native data applications ("apps"), such as those installed on PDAs, such as smartphones including IPHONE® mobile digital devices, BLACKBERRY® smart phones, WINDOWS MOBILE® mobile devices, and devices powered by the ANDROID™ mobile technology platform, now account for over 50% of all mobile data volume. Only a few years ago smartphone web browsing accounted for 70-80% of mobile Internet use, but now that number is shrinking in terms of relative use.

Known mobile platforms, such as the APPLE® IOS® mobile operating system, the WINDOWS MOBILE® mobile technology platform, the SYMBIAN® operating system, the PALM® mobile technology platform, the S60® mobile technology platform, and the ANDROID™ mobile technology platform currently are available, and each platform has its own programming language and requirements. Known PDA terminals, such as the IPHONE® mobile digital device, the IPOD TOUCH® mobile digital device, mobile devices produced by HTC Corporation powered by the ANDROID™ mobile technology platform, and BLACKBERRY® mobile devices, are also available on the market. These devices may connect to the Internet.

APPLE®, IPHONE®, and IPOD TOUCH® are registered trademarks of Apple, Inc. of Cupertino, California. IOS® is a registered trademark of Cisco Systems, Inc. of San Jose, California. PALM® is a registered trademark of Hewlett-Packard Company of Palo Alto, California. S60® and SYMBIAN® are registered trademarks of Nokia Corporation of Espoo, Finland. BLACKBERRY® is a registered trademark of Research In Motion Limited of Ontario, Canada. WINDOWS MOBILE® is a registered trademark of Microsoft Corporation of Redmond, Washington. ANDROID™ is a trademark of Google, Inc. of Mountain View, California.
WO 2006/094296 A1 describes a method for determining the voice and/or data processing performance or capability of a wireless device. The method includes a wireless device having a computer platform with a processing engine operable to generate a plurality of performance data during voice and/or data processing activities on the wireless device. The wireless device further includes a voice/data performance module operable to collect selected ones of the plurality of performance data associated with a predetermined voice and/or data processing capability of the wireless device. The performance module allows the transmission and remote analysis of the performance data.
US 2006/0234639 A1 describes a method by which a mobile wireless device dynamically decides the other end host to initiate a session to automatically conduct a performance test. Results of the performance test are then transferred to a monitoring server under appropriate conditions.

### SUMMARY

The trend towards increasing use of mobile apps over the web browser is due to the fact that, in most cases, apps provide the best user experience. As a result, web-based applications may be more attractive to an end user if they're packaged in a native wrapper. In order to improve the user experience of Web dependent applications there is a need to gain more insight into the performance of these applications.

It is an object of the invention to provide an improved method as claimed in claim 1 for executing an application installed onto a PDA terminal with which more insight into the performance of said application may be gained. Another object of the present invention is to provide a system as claimed in the independent system claim within the appended claims. A further object of the present invention is to provide a logic as claimed in the independent logic claim within the appended claims.

According to embodiments of the present disclosure, a method for obtaining information related to an application may comprise receiving, at a terminal device, data exchange information, comprising data transfer speed information, that is related to a data exchange between the terminal device and a web service. The method further may comprise storing, at the terminal device, at least a portion of the data exchange information received at the terminal device.

Particular embodiments may further comprise transmitting at least a portion of the data exchange information stored at the terminal device to a web server. Particular embodiments may further comprise removing the at least a portion of the data exchange information stored at the terminal device after transmitting the at least a portion of the data exchange information stored at the terminal device to the web server. Particular embodiments may further comprise receiving, at the terminal device, feedback information from the web server after transmitting the at least a portion of the data exchange information stored at the terminal device to the web server; and processing the feedback information received from the web server. In particular embodiments, the storing may comprise storing the at least a portion of the data exchange information received at the terminal device on a memory of the terminal device. In particular embodiments, the storing may comprise storing the at least a portion of the data exchange information received at the terminal device on a drive of the terminal device.

Particular embodiments may further comprise analyzing, at the terminal device, the at least a portion of the data exchange information received at the terminal device. In particular embodiments, the transfer speed information may comprise one or more of a data download speed and a data upload speed. In particular embodiments, the data exchange information may further comprise information corresponding to one or more of: a size of data exchanged between the terminal device and the web service, a type of a particular application to be executed on the terminal device, a type of the terminal device, a location of the terminal device, data regarding a network comprising the terminal device, an actual time, and data regarding errors related to the data exchange between the terminal device and the web service. In particular embodiments, the receiving of the data exchange information may occur for a predetermined period of time. In particular embodiments, the terminal device may comprise a mobile telephone.

In particular embodiments, the web service may comprise a web application programming interface. In particular embodiments, the method may further comprise executing a particular application on the terminal device. In particular embodiments, the terminal device may comprise a PDA terminal; and the particular application may comprise a native application installed on the PDA terminal. In particular embodiments, an application stored on one or more non-transitory, computer-readable media, may comprise instructions that, when executed by a processor, are operable to perform the above-described method.

According to other embodiments of the present invention, a system for obtaining information related to an application may comprise at least one terminal device. Each terminal device of the at least one terminal device may comprise a processor and a memory. The at least one terminal device may be configured to receive data exchange information, comprising data transfer speed information, that is related to a data exchange between the at least one terminal device and at least one web service. The at least one terminal device may be configured to store at least a portion of the received data exchange information.

Other particular embodiments may further comprise at least one web server configured to receive data exchange information from the terminal device. In other particular embodiments, the at least one terminal device may be configured to transmit at least a portion of the data exchange information stored thereon to at least one web server. In other particular embodiments, the at least one terminal device may be configured to remove the at least a portion of the data exchange information stored thereon after transmitting the at least a portion of the data exchange information stored thereon to the at least one web browser. In other particular embodiments, the at least one terminal device may be configured to receive feedback information from the at least one web server after transmitting the at least a portion of the data exchange information stored thereon to the at least one web browser. In other particular embodiments, the at least one terminal device may be configured to process the feedback information from the at least one web server.

According to still other embodiments of the present invention, one or more non-transitory, computer-readable media may store computer-readable instructions for a processor. The computer-readable instructions may instruct the processor to function as a communication module, a monitoring module, and a storage module. The communication module may be configured to exchange data with a web service. The monitoring module may be configured to receive, at a terminal device, data exchange information, comprising data transfer speed information, that is related to the data exchanged with the web service. The storage module may be configured to store, at the terminal device, at least a portion of the data exchange information received at the terminal device.

In still other particular embodiments, the communication module may be configured further to transmit the data exchange information stored at the terminal device to a web server.

According to yet other embodiments of the present invention, logic encoded in one or more non-transitory, computer-readable media may comprise instructions that, when executed by a processor, may be operable to receive, at a terminal device, data exchange information, comprising data transfer speed information, that is related to a data exchange between the terminal device and a web service. Instructions further may be operable to store, at the terminal device, at least a portion of the data exchange information received at the terminal device.

In still other particular embodiments, logic encoded in one or more non-transitory, computer-readable media may comprise instructions that, when executed by a processor, may be operable to transmit at least a portion of the data exchange information stored at the terminal device to a web server. In still other particular embodiments, logic encoded in one or more non-transitory, computer-readable media may comprise instructions that, when executed by a processor, may be operable to receive, at the terminal device, feedback information from the web server after transmitting the at least a portion of the data exchange information stored at the terminal device to the web server. In still other particular embodiments, logic encoded in one or more non-transitory, computer-readable media may comprise instructions that, when executed by a processor, may be operable to process the feedback information received from the web server.

Technical advantages of the present disclosure may comprise improvements of web dependent applications by gaining an insight into the performance of these applications. Other technical advantages may comprise improvements in the user experience based for applications running on many different operating systems. Other technical advantages of the present disclosure will be readily apparent to one skilled in the art from the following figures, descriptions, and claims. Moreover, while specific advantages have been enumerated above, various embodiments may comprise all, some, or none of the enumerated advantages.

Certain embodiments of the disclosure may include none, some, or all of the above technical advantages. One or more other technical advantages may be readily apparent to one skilled in the art from the figures, descriptions, and claims comprised herein, said claims defining the scope of the invention.

### BRIEF DESCRIPTION OF THE DRAWINGS

For a more complete understanding of the present disclosure and its advantages, reference is now made to the following non-limitative descriptions, taken in conjunction with the accompanying drawing.

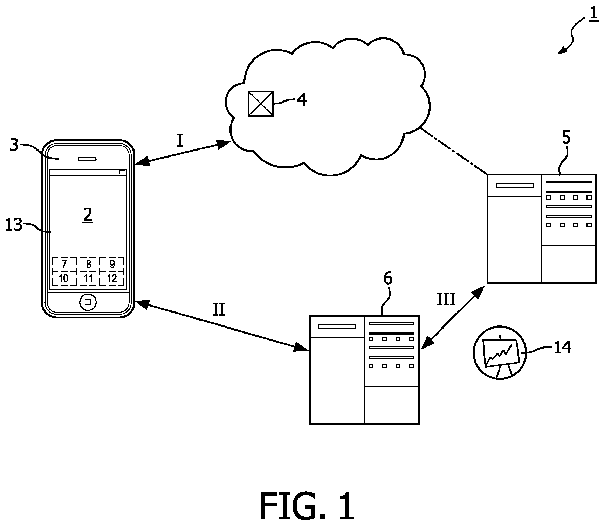

FIGURE 1 depicts a schematic view of a method and system for executing an application on a PDA terminal according to embodiments of the invention

### DETAILED DESCRIPTION OF EXAMPLE EMBODIMENTS

According to embodiments of the present disclosure, an application executed on a PDA terminal (e.g., terminal device) may instruct the PDA terminal to contact a web service. The application may exchange data, through the PDA terminal, with the web service and may collect data exchange information related to the data exchange between the application and the web service. The data exchange information may comprise transfer speed information related to the data transfer speed between the PDA terminal and the web service or the Internet. The application may instruct the PDA terminal to store the data exchange information thereon.

The interaction between the application and the web service, which may be formed by a web application programming interface ("API"), may be of great importance to the experience of a user using said application, wherein a fast and smooth (e.g., stable) exchange of data will may contribute positively to the user experience. By monitoring on the PDA terminal one or more characteristics related to this web connection, such as one or more of the download transfer rate, the upload transfer rate, and the size of the transferred data, users and other parties, such as developers, distributors, and manufacturers, may gain an insight in the performance of native and non-native applications. To enable the application to collect the data exchange information, suitable instructions (e.g., "AppPerformance code" (library)) may be incorporated in the application code dependent on the platform used (e.g., the APPLE® IOS® mobile operating system, the WINDOWS MOBILE® mobile technology platform, the SYMBIAN® operating system, the PALM® mobile technology platform, the S60® mobile technology platform, and the ANDROID™ mobile technology platform). The PDA terminal may be a handheld mobile device, which may be, but is not limited to, a mobile phone or a smart phone device which may be configured to connect to the Internet.

The data exchange information may be stored permanently or temporarily onto the PDA terminal. The collected information may be analyzed, completely or partially, on the PDA terminal and, alternatively or additionally, may be communicated to one or more web servers for analysis or further analysis, respectively. The method may further comprise removing data exchange information from the PDA terminal after transmitting the data exchange information to the web server. A user of the PDA terminal may selectively authorize uploading information to the web server, wherein the user may decide that uploading is not allowed during one or more of roaming and use of a common mobile data network (e.g., a general packet radio service ("GPRS") network or an enhanged GPRS network) of the carrier used. The web server may be administered by a third party, which may analyze the data received and, alternatively or additionally, may communicate the analyzed or original data to the user and, alternatively or additionally, to other parties, such as the publisher, distributor, manufacturer, and developer of the application. The method may further comprise processing feedback information provided by the web server and received by the application after receiving the data exchange. This feedback information may indicate that, for a period of time, the PDA terminal need not upload further collected information to the web server.

The PDA terminal may store the data exchange information permanently or temporarily. The PDA terminal may store the data exchange information into a memory therein. Memory may refer to a form of semiconductor storage known as random access memory ("RAM"), typically dynamic-RAM ("DRAM"), but memory may refer to other forms of fast but temporary storage. Alternatively or additionally, the PDA terminal may store the data exchange information onto a storage device (e.g., secondary or tertiary storage) of the PDA terminal. Such storage devices and their media may not directly accessible by the central processing unit ("CPU") of the PDA and may comprise hard disk drives, optical disc drives, and other devices slower than RAM but more permanent.

In addition to transfer speed information (e.g., data upload speed information and data download speed information), one or more of the applications, through the PDA terminal, and the web server may monitor other data exchange information in order to improve insight into the performance of the application. Therefore, the data exchange information may further comprise information identifying at least one of the following parameters: a size of data exchanged between the PDA terminal and the web service, a type of the application, a type of the PDA terminal, a location of the PDA terminal, data regarding a network comprising the PDA terminal, an actual time, and data regarding errors related to the data exchange with the web service, or other information related to the exchange of data with the web service. Information relating to the application type may comprise, for example, the name of the application and the version of the application. Information relating the PDA terminal type may comprise, for example, the hardware type and model of the PDA terminal and the platform type and platform version installed on the PDA terminal. The network related information may comprise the internet protocol ("IP") address used by the PDA terminal and other characteristics of the wireless network used, such as the type network (e.g., Wi-Fi, GPRS, enhanced GPRS) and the carrier or carriers used to set up the network. Furthermore, information relating to the geographical location may be collected by using a location determining module based upon, for example, Global Positioning Satellite ("GPS") in the United States, Global Navigation Satellite System ("GLONASS") in Russia, Compass Navigation System in China, and Galileo in Europe. Other location dependent information, such as the iso/mobile country code and the mobile network code, may also be collected and stored.

Monitoring the data exchange process and collecting the desired information may be performed continuously or discontinuously. The data exchange information may be monitored during a predefined or limited period of time while collecting the data exchange information. The predefined or limited period of time may be monitored by using a timer.

Other embodiments of the invention may relate to systems for executing applications on a mobile communications device. In particular these systems may be configured to operate according to the method of the above-described embodiments. The system may comprise at least one PDA terminal and at least one web service. The at least one PDA terminal may comprise at least one application which may instruct the PDA terminal to make wireless contact with a web service of the at least one web service. The at least one web service may be configured to exchange data with an application of the at least one application, through the PDA terminal. The application may be further configured to collect data exchange information related to the data exchange between the application and the web service. The data exchange information may comprise transfer speed information related to the data transfer speed between the PDA terminal and the web service or the Internet. The application may instruct the PDA terminal to store the data exchange information thereon.

Advantages of using such a system as well as embodiments of the system are similar to the advantages of using the method of the above-described embodiments. The system may comprise at least one web server configured to receive collected data exchange information transmitted by the PDA terminal. This web server may be administered by a third party, which may analyze the collected information, and which may forward at least a part of this information to one or multiple other parties. The web service and the web server may be mutually connected and may even be mutually integrated.

Still other embodiments of the invention may relate to one or more non-transitory, computer-readable media comprising computer-readable instructions for a processor of a PDA terminal. The computer-readable instructions may relate to executing an application on the PDA terminal. The computer-readable instructions may instruct the processor to function as a communication module for wirelessly exchanging data with a web service. The computer-readable instructions may further instruct the processor to function as a monitoring module for collecting data exchange information relating to the data exchange between the application, through the PDA terminal, and the web service. The data exchange information may comprise transfer speed information. The computer-readable instructions may further instruct the processor to function as a storage module for storing at least a portion of the data exchange information on the PDA terminal. The computer-readable instructions may instruct the processor to function as a screen builder for generating a user interface for the application. The communication module may be further configured to send the data exchange information to a web server.

Yet other embodiments may relate to non-transitory, computer-readable media comprising an application for a PDA terminal. The application may be configured to perform the method of the above-described embodiments. The application, which may also be referred to as "app", may be of various nature and may comprise, for example, a utility, a game, or another type of app. Still yet other embodiments may further relate to a logic module comprising logic for performing the method of the above-described embodiments. The logic module may be configured to be incorporated into application code of the above-described application. The logic module may instruct a processor of the PDA terminal to collect data exchange information relating to the data exchange between the application, through the PDA terminal, and the web service. The data exchange information may comprise transfer speed information. The logic module may instruct the processor of the PDA terminal to store at least a part of the data exchange related information on the PDA terminal. The logic module may be a piece of software or a software library incorporated or to be incorporated in source programming code of the application. The logic module may provide the application with the additional functionality of tracking performance of data transfer between the PDA terminal and the web service or the Internet during use. Further other embodiments may relate to a method for measuring the performance of an application by collecting and storing data exchange information according to the method of the above-described embodiments.

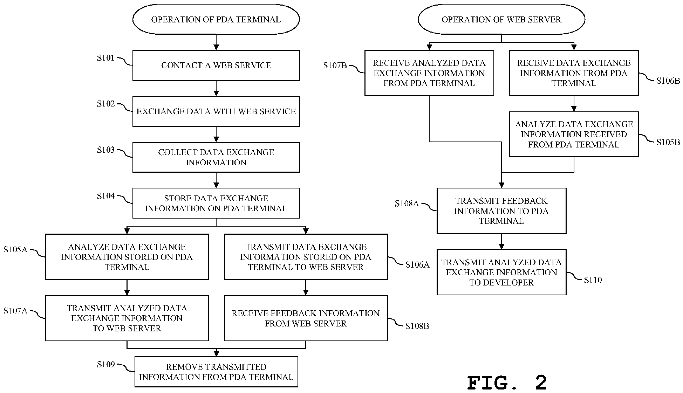

Embodiments of the present disclosure and its advantages may be understood by referring to FIGURES 1 and 2 of the drawings, like numerals being used for like and corresponding parts of the various drawings.

FIGURE 1 depicts a schematic view of a system 1 for executing an application 2 on a smart phone 3 according to the embodiments of the invention. Figure 2 depicts a method which may be performed by the system 1 of FIGURE 1. The application 2 may be configured contact a web API 4 (e.g., web service) at step S101, for example, which may make part of the system 1 to retrieve specified information at step S103, for example. The developer 5 of the application 2 may monitor (e.g., steps S103-S110) the data exchange rate between the application 2 and the web API 4 during step S102, for example, which may provide the developer 5 with an indication of the performance of the application 2 on the smart phone 3. To The application code may comprise an "AppPerformance code," which intermediate application performance monitoring party 6 may provide as a library. The application 2 may make different calls to the web API 4 at step 101, for example. The developer 5 may selectively choose which calls to monitor. The application 2 may be installed onto the smart phone 3 by a user. The user may install the application 2 by downloading the application 2 from an application store (e.g., an "App store," which is not depicted in FIGURE 1). Once the application 2 has been installed onto the smart phone 3, the application 2 may be executed. During operation of the application 2 the application 2 may make multiple calls to the web API 4 to retrieve specified information. The specified information may be information which may be useful to a user. The predefined calls may be monitored by the smart phone 3, wherein data exchange related information related to these calls may be collected and stored in a memory 7 or on a drive 8 of the smart phone 3. Together with this information, actual location dependent information gathered by, for example, a GPS module 9 also may be stored in the memory 7 or on the drive 8. Monitoring the predefined calls may be done continuously or for a limited period of time (e.g., several seconds or minutes) by using a timer 10. A processing unit 11 of the smart phone 3 may process and eventually analyze the collected information at step S105A, for example. Wireless communication may be established by using a communication module 12. The information may subsequently be visualized to the user via a user interface ("UI") 13. In this example embodiment, at least a part of the information may be sent wirelessly to a web server 6 (e.g., AppPerformance Server) of the application performance monitoring party 6 at steps S106A and S107A, for example. For example, at step S105B, the web server 6 may process and analyze the information received at steps S106B and steps S107B. Thereafter, at step S110, for example, the processed information 14 may be provided as one or more reports to the developer 5 by one or more of mail and a web interface. The processed information 14 may provide the developer 5 with information on the performance of the application. The performance characteristics monitored during the predefined calls may comprise the transfer speed (e.g., download speed and upload speed) between the application 2 and the web API 4, the duration of the call, the number of exchanged bytes (e.g., bytes sent and received), eventual errors during the exchange process, network characteristics, smart phone characteristics, and location-based information. As soon as a possible (e.g., as soon as a connection can be established between the application and the web server 6), the information, or at least a portion thereof, may be sent to the web server 6. The user may determine, via settings of the application 2 or of the smart phone 3, that establishing a connection between the application 5 and the web server 6 is not allowed during one or more of roaming and communication via a mobile data network (e.g., GPRS or enhanced GPRS) of the carrier used. When the application performance monitoring party 6 (e.g., web server 6) finds that the performance of the application is poor, a warning may be provided to the developer 5. At step S108A, for example, the web server 6 may transmit feedback information to the smart phone 3. At step S108A, for example, the smart phone 3 may receive the feedback information from the web server 6. The feedback information may indicate that, for a period of time, the smart phone 3 need not transmit collected information to the web server 6.

Although the present disclosure has been described in several embodiments, a myriad of changes, substitutions, and modifications may be suggested to one skilled in the art, and it is intended that the present disclosure encompass such changes, substitutions, and modifications as fall within the scope of the present appended claims. It should be noted that the above-mentioned embodiments illustrate rather than limit the invention, whose scope is defined by the appended claims. Use of the verb "comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. Method for obtaining information related to a native data application (2) developed by a developer (5), the method comprising:
executing the native data application (2) at a terminal device (3);
exchanging data with a web service (4) by the native data application (2);
collecting, by the native data application (2), data exchange information that is related to a data exchange between the native data application (2) and the web service (4);
instructing, by the native data application (2), the terminal device (3) to store at least a portion of the data exchange information collected by the native data application; and
analyzing, at the terminal device (3), at least a portion of the data exchange information stored at the terminal device (3) to determine performance of the native data application (2), transmitting at least a portion of the data exchange information stored at the terminal device (3) to a web server (6) of an intermediate application performance monitoring party other than the developer (5), the web server (6) processing and analysing the information received from the terminal device (3), said processed information (14) being provided as one or more reports to the developer (5).

2. Method of claim 1, further comprising removing the at least a portion of the data exchange information stored at the terminal device (3) after transmitting the at least a portion of the data exchange information stored at the terminal device (3) to the web server (6).

3. Method of claim 1 or claim 2, further comprising:
receiving, at the terminal device (3), feedback information from the web server (6) after transmitting the at least a portion of the data exchange information stored at the terminal device (3) to the web server (6); and
processing the feedback information received from the web server (6).

4. Method of any of the foregoing claims, wherein the storing comprises storing the at least a portion of the data exchange information received at the terminal device (3) on a memory (7) of the terminal device (3).

5. Method of any of the foregoing claims, wherein the storing comprises storing the at least a portion of the data exchange information received at the terminal device (3) on a drive (8) of the terminal device (3).

6. Method of any of the foregoing claims, wherein the transfer speed information comprises one or more of a data download speed and a data upload speed.

7. Method of any of the foregoing claims wherein the data exchange information further comprises information corresponding to one or more of:
a size of data exchanged between the native data application (2) and the web service (4),
a type of the native data application (2) executed on the terminal device (3),
a type of the terminal device (3),
a location of the terminal device (3),
data regarding a network comprising the terminal device (3),
an actual time, and
data regarding errors related to the data exchange between the native data application (2) and the web service (4).

8. Method of any of the foregoing claims, wherein the data exchange information is collected during a predefined or limited period of time.

9. Method of any of the foregoing claims, wherein the terminal device (3) comprises a mobile telephone.

10. Method of any of the foregoing claims, wherein the web service (4) comprises a web application programming interface.

11. Method of any of the foregoing claims, wherein the terminal device (3) comprises a personal digital assistant ("PDA") terminal.

12. System (1) for obtaining information related to a native data application (2) developed by a developer (5), the system (1) comprising:
at least one terminal device (3),
wherein each terminal device (3) of the at least one terminal device (3) comprises:
a processor operable to execute the native data application (2), the native data application (2) operable to exchange data with at least one web service (4); and
a memory (7),
wherein the native data application (2) is configured to collect data exchange information that is related to a data exchange between the native data application (2) and the at least one web service (4),
wherein the native data application (2) is configured to instruct the terminal device (3) to store at least a portion of the collected data exchange information,
wherein the at least one terminal device (3) is configured to analyse at least a portion of the data exchange information to determine performance of the native data applications (2), the terminal device (3) being further configured to transmit at least a portion of the data exchange information stored at the terminal device (3) to a web server (6) of an intermediate application performance monitoring party other than the developer (5), the system further comprising the web server (6) of an intermediate application performance monitoring party other than the developer (5) the web server (6) being configured to receive data exchange information when transmitted from the at least one terminal device (3), the web server (6) being further configured to process and analyse the information received from the terminal device (3), the web server (6) being further configured to provide said processed information (14) as one or more reports to the developer (5).

13. System (1) of claim 12, wherein the at least one terminal device (3) is configured to remove the at least a portion of the data exchange information stored thereon after transmitting the at least a portion of the data exchange information stored thereon to the at least one web server (6).

14. System of claim 12 or 13, wherein the at least one terminal device (3) is configured to receive feedback information from the at least one web server (6) after transmitting the at least a portion of the data exchange information stored thereon to the at least one web server (6), and wherein the at least one terminal device (3) is configured to process the feedback information from the at least one web server (6).

15. Logic encoded in one or more non-transitory, computer-readable media, the logic comprising instructions that, when executed by a processor, are operable to perform the method as claimed in claim 1.

16. Logic of claim 15 further comprising instructions that, when executed by a processor, are operable to:
receive, at the terminal device (3), feedback information from the web server (6) after transmitting the at least a portion of the data exchange information stored at the terminal device (3) to the web server (6); and
process the feedback information received from the web server (6).

## Patentansprüche

1. Verfahren zum Erhalten von Informationen im Zusammenhang mit einer nativen Datenanwendung (2), die von einem Entwickler (5) entwickelt wird, wobei das Verfahren Folgendes umfasst:
Ausführen der nativen Datenanwendung (2) an einem Endgerät (3);
Austauschen von Daten mit einem Web-Dienst (4) durch die native Datenanwendung (2);
Sammeln durch die native Datenanwendung (2) von Datenaustauschinformationen, die mit einem Datenaustausch zwischen der nativen Datenanwendung (2) und dem Web-Dienst (4) verknüpft sind;
Anweisen durch die native Datenanwendung (2) des Endgeräts (3), mindestens einen Teil der Datenaustauschinformationen zu speichern, die von der nativen Datenanwendung gesammelt werden; und
Analysieren an dem Endgerät (3) mindestens eines Teils der Datenaustauschinformationen, die an dem Endgerät (3) gespeichert sind, um die Leistung der nativen Datenanwendung (2) zu bestimmen, Übertragen mindestens eines Teils der Datenaustauschinformationen, die an dem Endgerät (3) gespeichert sind, zu einem Web-Server (6) einer anderen
Zwischenanwendungsleistungsüberwachungspartei als dem Entwickler (5), wobei der Web-Server (6) die Informationen, die von dem Endgerät (3) erhalten werden, verarbeitet und analysiert, wobei die verarbeiteten Informationen (14) dem Entwickler (5) als ein oder mehrere Berichte bereitgestellt werden.

2. Verfahren nach Anspruch 1, ferner umfassend das Entfernen des mindestens einen Teils der Datenaustauschinformationen, die an dem Endgerät (3) gespeichert sind, nach dem Übertragen des mindestens einen Teils der Datenaustauschinformationen, die an dem Endgerät (3) gespeichert sind, zu dem Web-Server (6).

3. Verfahren nach Anspruch 1 oder 2, ferner umfassend:
Erhalten an dem Endgerät (3) von Rückkopplungsinformationen von dem Web-Server (6) nach dem Übertragen des mindestens einen Teils der Datenaustauschinformationen, die an dem Endgerät (3) gespeichert sind, zu dem Web-Server (6); und
Verarbeiten der Rückkopplungsinformationen, die von dem Web-Server (6) erhalten werden.

4. Verfahren nach einem der vorherigen Ansprüche, wobei das Speichern das Speichern des mindestens einen Teils der Datenaustauschinformationen, die an dem Endgerät (3) erhalten werden, in einem Speicher (7) des Endgeräts (3) umfasst.

5. Verfahren nach einem der vorherigen Ansprüche, wobei das Speichern das Speichern des mindestens einen Teils der Datenaustauschinformationen, die an dem Endgerät (3) erhalten werden, auf einem Laufwerk (8) des Endgeräts (3) umfasst.

6. Verfahren nach einem der vorherigen Ansprüche, wobei die Übertragungsgeschwindigkeitsinformationen eine oder mehrere einer Datendownloadgeschwindigkeit und einer Datenuploadgeschwindigkeit umfassen.

7. Verfahren nach einem der vorherigen Ansprüche, wobei die Datenaustauschinformationen ferner Informationen entsprechend einer oder mehrerer der Folgenden umfassen:
eine Größe von Daten, die zwischen der nativen Datenanwendung (2) und dem Web-Dienst (4) ausgetauscht werden,
eine Art der nativen Datenanwendung (2), die auf dem Endgerät (3) ausgeführt wird,
eine Art des Endgeräts (3),
ein Ort des Endgeräts (3),
Daten bezüglich eines Netzwerks, das das Endgerät (3) aufweist,
eine tatsächliche Zeit, und
Daten bezüglich Fehlern im Zusammenhang mit dem Datenaustausch zwischen der nativen Datenanwendung (2) und dem Web-Dienst (4).

8. Verfahren nach einem der vorherigen Ansprüche, wobei die Datenaustauschinformationen während einem vorab definierten oder begrenzten Zeitraum gesammelt werden.

9. Verfahren nach einem der vorherigen Ansprüche, wobei das Endgerät (3) ein Mobiltelefon umfasst.

10. Verfahren nach einem der vorherigen Ansprüche, wobei der Web-Dienst (4) eine Web-Anwendungsprogrammierungsschnittstelle umfasst.

11. Verfahren nach einem der vorherigen Ansprüche, wobei das Endgerät (3) ein persönliches digitales Assistent ("PDA")-Endgerät umfasst.

12. System (1) zum Erhalten von Informationen im Zusammenhang mit einer nativen Datenanwendung (2), die von einem Entwickler (5) entwickelt wird, wobei das System (1) Folgendes aufweist:
mindestens ein Endgerät (3),
wobei jedes Endgerät (3) des mindestens einen Endgeräts (3) Folgendes aufweist:
einen Prozessor, der bedient werden kann, um die native Datenanwendung (2) auszuführen, wobei die native Datenanwendung (2) betrieben werden kann, um Daten mit mindestens einem Web-Dienst (4) auszutauschen; und
einen Speicher (7),
wobei die native Datenanwendung (2) konfiguriert ist, um
Datenaustauschinformationen zu sammeln, die mit einem Datenaustausch zwischen der nativen Datenanwendung (2) und dem mindestens einen Web-Dienst (4) verknüpft sind,
wobei die native Datenanwendung (2) konfiguriert ist, um das Endgerät (3) anzuweisen, mindestens einen Teil der gesammelten
Datenaustauschinformationen zu speichern,
wobei das mindestens eine Endgerät (3) konfiguriert ist, um mindestens einen Teil der Datenaustauschinformationen zu analysieren, um die Leistung der nativen Datenanwendungen (2) zu bestimmen, wobei das Endgerät (3) ferner konfiguriert ist, um mindestens einen Teil der Datenaustauschinformationen, die in dem Endgerät (3) gespeichert sind, zu einem Web-Server (6) einer anderen Zwischenanwendungsleistungsüberwachungspartei als dem Entwickler (5) zu übertragen,
wobei das System ferner den Web-Server (6) einer anderen Zwischenanwendungsleistungsüberwachungspartei als dem Entwickler (5) aufweist, wobei der Web-Server (6) konfiguriert ist, um
Datenaustauschinformationen zu erhalten, wenn sie von dem mindestens einen Endgerät (3) übertragen werden, wobei der Web-Server (6) ferner konfiguriert ist, um die Informationen, die von dem Endgerät (3) erhalten werden, zu verarbeiten und zu analysieren, wobei der Web-Server (6) ferner konfiguriert ist, um die verarbeiteten Informationen (14) dem Entwickler (5) als einen oder mehrere Berichte bereitzustellen.

13. System (1) nach Anspruch 12,
wobei das mindestens eine Endgerät (3) konfiguriert ist, um den mindestens einen Teil der Datenaustauschinformationen, die darin gespeichert sind, nach dem Übertragen des mindestens einen Teils der Datenaustauschinformationen, die darin gespeichert sind, zu dem mindestens einen Web-Server (6) zu entfernen.

14. System nach Anspruch 12 oder 13,
wobei das mindestens eine Endgerät (3) konfiguriert ist, um Rückkopplungsinformationen von dem mindestens einen Web-Server (6) nach dem Übertragen des mindestens einen Teils der Datenaustauschinformationen, die darin gespeichert sind, zu dem mindestens einen Web-Server (6) zu erhalten, und
wobei das mindestens eine Endgerät (3) konfiguriert ist, um die Rückkopplungsinformationen von dem mindestens einen Web-Server (6) zu verarbeiten.

15. Logik, die in einem oder mehreren nichtflüchtigen computerlesbaren Medien codiert ist, wobei die Logik Anweisungen aufweist, die, wenn sie von einem Prozessor ausgeführt werden, betrieben werden können, um das Verfahren nach Anspruch 1 durchzuführen.

16. Logik nach Anspruch 15, die ferner Anweisungen aufweist, die, wenn sie von einem Prozessor ausgeführt werden, betrieben werden können, um:
an dem Endgerät (3) Rückkopplungsinformationen von dem Web-Server (6) nach dem Übertragen des mindestens einen Teils der Datenaustauschinformationen, die an dem Endgerät (3) gespeichert sind, zu dem Web-Server (6) zu erhalten; und
die Rückkopplungsinformationen, die von dem Web-Server (6) erhalten werden, zu verarbeiten.

## Revendications

1. Procédé d'obtention d'informations liées à une application de données native (2) développée par un développeur (5), le procédé comprenant de :
exécuter l'application de données native (2) sur un dispositif terminal (3) ;
échanger des données avec un service Web (4) par l'application de données native (2) ;
collecter, par l'application de données native (2), des informations d'échange de données qui sont liées à un échange de données entre l'application de données native (2) et le service Web (4) ;
ordonner, par l'application de données native (2), au dispositif terminal (3) de stocker au moins une partie des informations d'échange de données collectées par l'application de données native ;
et
analyser, au niveau du dispositif terminal (3), au moins une partie des informations d'échange de données stockées sur le dispositif terminal (3) pour déterminer la performance de l'application de données native (2), transmettre au moins une partie des informations d'échange de données stockées au niveau du dispositif terminal (3) à un serveur Web (6) d'un tiers de surveillance de performance d'application, autre que le développeur (5), le serveur Web (6) traitant et analysant les informations reçues à partir du dispositif terminal (3), lesdites informations traitées (14) étant fournies sous la forme d'un ou de plusieurs rapports au développeur (5).

2. Procédé selon la revendication 1, comprenant en outre de supprimer ladite au moins une partie des informations d'échange de données stockées sur le dispositif terminal (3) après avoir transmis au serveur Web (6) ladite au moins une partie des informations d'échange de données stockées sur le dispositif terminal (3).

3. Procédé selon la revendication 1 ou la revendication 2, comprenant en outre de :
recevoir, au niveau du dispositif terminal (3), des informations de rétroaction à partir du serveur Web (6) après la transmission de ladite au moins une partie des informations d'échange de données stockées sur le dispositif terminal (3) au serveur Web (6) ; et
traiter les informations de rétroaction reçues à partir du serveur Web (6).

4. Procédé selon l'une quelconque des revendications précédentes, dans lequel le stockage comprend de stocker ladite au moins une partie des informations d'échange de données reçues au niveau du dispositif terminal (3) sur une mémoire (7) du dispositif terminal (3).

5. Procédé selon l'une quelconque des revendications précédentes, dans lequel le stockage comprend de stocker ladite au moins une partie des informations d'échange de données reçues au niveau du dispositif terminal (3) sur un lecteur (8) du dispositif terminal (3).

6. Procédé selon l'une quelconque des revendications précédentes, dans lequel les informations de vitesse de transfert comprennent l'une ou plusieurs parmi une vitesse de téléchargement en réception de données et une vitesse de téléchargement en émission de données.

7. Procédé selon l'une quelconque des revendications précédentes, dans lequel les informations d'échange de données comprennent en outre des informations correspondant à l'un ou plusieurs parmi :
une taille de données échangées entre l'application de données native (2) et le service Web (4),
un type de l'application de données native (2) exécutée sur le dispositif terminal (3),
un type du dispositif terminal (3),
un emplacement du dispositif terminal (3),
des données concernant un réseau comprenant le dispositif terminal (3),
un temps réel, et
des données concernant des erreurs liées à l'échange de données entre l'application de données native (2) et le service Web (4).

8. Procédé selon l'une quelconque des revendications précédentes, dans lequel les informations d'échange de données sont collectées pendant une période de temps prédéfinie ou limitée.

9. Procédé selon l'une quelconque des revendications précédentes, dans lequel le dispositif terminal (3) comprend un téléphone mobile.

10. Procédé selon l'une quelconque des revendications précédentes, dans lequel le service Web (4) comprend une interface de programmation d'application Web.

11. Procédé selon l'une quelconque des revendications précédentes, dans lequel le dispositif terminal (3) comprend un terminal assistant numérique personnel ("PDA").

12. Système (1) d'obtention d'informations liées à une application de données native (2) développée par un développeur (5), le système (1) comprenant :
au moins un dispositif terminal (3),
dans lequel chaque dispositif terminal (3) dudit au moins un dispositif terminal (3) comprend :
un processeur permettant d'exécuter l'application de données native (2),
l'application de données native (2) permettant d'échanger des données avec au moins un service Web (4) ; et
une mémoire (7),
dans lequel l'application de données native (2) est configurée pour collecter des informations d'échange de données qui sont liées à un échange de données entre l'application de données native (2) et ledit au moins un service Web (4),
dans lequel l'application de données native (2) est configurée pour ordonner au dispositif terminal (3) de stocker au moins une partie des informations d'échange de données collectées,
dans lequel ledit au moins un dispositif terminal (3) est configuré pour analyser au moins une partie des informations d'échange de données pour déterminer la performance de l'application de données native (2), le dispositif terminal (3) étant en outre configuré pour transmettre au moins une partie des informations d'échange de données stockées sur le dispositif de terminal (3) à un serveur Web (6) d'un tiers de surveillance de performance d'application autre que le développeur (5),
le système comprenant en outre le serveur Web (6) d'un tiers de surveillance de performance d'application autre que le développeur (5), le serveur Web (6) étant configuré pour recevoir des informations d'échange de données lorsqu'elles sont transmises à partir dudit au moins un terminal (3), le serveur Web (6) étant en outre configuré pour traiter et analyser les informations reçues à partir du dispositif terminal (3), le serveur Web (6) étant en outre configuré pour fournir lesdites informations traitées (14) sous la forme d'un ou plusieurs rapports au développeur (5).

13. Système (1) selon la revendication 12,
dans lequel ledit au moins un dispositif terminal (3) est configuré pour supprimer au moins une partie des informations d'échange de données stockées sur celui-ci après la transmission de ladite au moins une partie des informations d'échange de données stockées sur le serveur Web (6).

14. Système selon la revendication 12 ou 13,
dans lequel ledit au moins un dispositif terminal (3) est configuré pour recevoir des informations de rétroaction à partir dudit au moins un serveur Web (6) après la transmission de ladite au moins une partie des informations d'échange de données stockées sur celui-ci audit au moins un serveur Web (6), et
dans lequel ledit au moins un dispositif terminal (3) est configuré pour traiter les informations de rétroaction provenant dudit au moins un serveur Web (6).

15. Logique codée dans un ou plusieurs supports lisibles par ordinateur non transitoires, la logique comprenant des instructions qui, lorsqu'elles sont exécutées par un processeur, servent à exécuter le procédé selon la revendication 1.

16. Logique selon la revendication 15, comprenant en outre des instructions qui, lorsqu'elles sont exécutées par un processeur, servent à :
recevoir, au niveau du dispositif terminal (3), des informations de rétroaction provenant du serveur Web (6) après la transmission de ladite au moins une partie des informations d'échange de données stockées sur le dispositif terminal (3) au serveur Web (6) ; et
traiter les informations de rétroaction reçues à partir du serveur Web (6).
